# EUROPÄISCHE PATENTSCHRIFT

(11) **EP 1 339 472 B1**
(45) Veröffentlichungstag und Bekanntmachung des Hinweises auf die Patenterteilung: **07.09.2005**
(21) Anmeldenummer: 01998388.1
(22) Anmeldetag: 03.12.2001
(51) Int. Cl.: B01D 29/15, B01D 29/52, B01D 29/60, B01D 36/00

(54) **FILTEREINHEIT MIT EINER VIELZAHL VON FILTERKERZEN**
FILTER UNIT COMPRISING A PLURALITY OF FILTER CANDLES
INSTALLATION DE FILTRATION

(30) Priorität: 01.12.2000 DE 10060022
(43) Veröffentlichungstag der Anmeldung: 03.09.2003
(73) Patentinhaber: Brüggert, Hannelore, 46487 Wesel (DE)
(72) Erfinder: Brüggert, Detlef, 46487 Wesel (DE)
(74) Vertreter: Füssel, Michael
(86) Internationale Anmeldenummer: PCT/DE2001/004493
(87) Internationale Veröffentlichungsnummer: WO 2002/043831

(56) Entgegenhaltungen:
- DE-A- 4 140 770
- DE-A- 10 002 397
- FR-A- 2 159 696

## Beschreibung

Die vorliegende Erfindung betrifft eine Filteranlage für das Wasser von Zierfischbecken und Gartenteichen.

Derartige Filteranlagen sind in vielfältigen Ausführungsbeispielen bekannt, zum Beispiel aus Koi Magazin, Sonderheft 1998.

Derartige Filteranlagen gibt es als Rieselfilter, als Zyklonfilter und als Durchströmungsfilter, bei welchen voluminöse Filterpakete vollständig vom Wasserstrom durchströmt werden, wie z.b. bei der Filteranlage aus DE 20000897 U1.

Aufgabe der vorliegenden Erfindung ist es, eine Filteranlage in der Bauart "Durchströmfilter" zu schaffen, bei welcher der sich in Durchströmrichtung hinter den Filterpaketen ansammelnde Schmutz Keinesfalls erneut in das Zierfischbecken bzw den Gartenteich eingetragen werden kann.

Diese Aufgabe wird gelöst durch die Merkmale des Anspruchs 1.

Wesentlich für die Erfindung ist auch ein rechnerischer Wasserdurchsatz, der nicht mehr als 1200 l/m² Filter Außenfläche/Betriebsstunde beträgt.

Auf diese Weise wird die Durchtrittsgeschwindigkeit des filternden Wassers so begrenzt, daß der Schmutz im Zulaufwasser außen auf den Filterpaketen haften bleibt und nicht in das Filterpaket hineingesaugt wird.

Es entsteht somit ein biologischer Rasen auf den Außenflächen der jeweiligen Filterpaketen, der einerseits das voluminöse Filterpaket nicht zusetzt und der andererseits maßgeblich am Abbau von aeroben und anaeroben Bakterienstämmen zur Reinigung des zulaufenden Wassers beteiligt ist.

Durch die geringe Strömungsgeschwindigkeit erfolgt ein effektiver Nitratabbau, wobei sich die einzelnen Filterpakete in der Durchströmrichtung des Wassers durchaus sequentiell so zusetzen dürfen, daß die zuerst angeströmten Filterelemente den beabsichtigten biologischen Rasen zuerst entstehen lassen. Dieser Überlegung liegt die Tatsache zugrunde, daß der Durchströmwiderstand der zuerst angeströmten Filterpakete somit ansteigt und daß das zu reinigende Wasser alsdann diejenigen Filterpakete durchströmt, die in Fließrichtung hinter den zuerst angeströmten Filterpaketen liegen. Dort wird dann aufgrund des vermehrten Auftretens von Schmutzpartikeln der biologische Rasen bevorzugt gebildet, bis alle Filterpakete den biologischen Rasen auf ihren Oberflächen aufgebaut haben.

Insgesamt wird somit die Filterwirkung infolge der geringen Anströmgeschwindigkeit mit zunehmendem Filterungsbetrieb verbessert, da die optimale Filterwirkung erreicht ist, wenn die gesamte zur Verfügung stehende Oberfläche aller Filterpakete den biologischen Rasen trägt.

Vorteilhafte Ausführungsformen ergeben sich aus den Unteransprüchen.

Im folgenden wird die Erfindung anhand von Ausführungsbeispielen näher erläutert. Es zeigen:

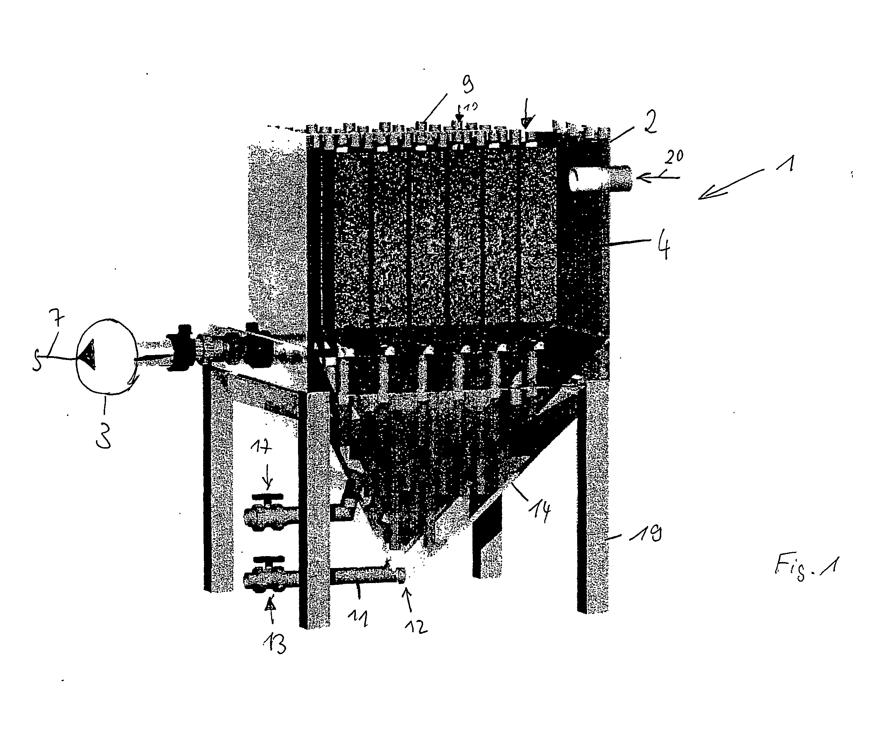

Fig.1 ein erstes Ausführungsbeispiel der Erfindung in 3-D-Ansicht,
Fig.2 ein Ausführungsbeispiel der Erfindung (schematisch) gemäß Fig.1 im Querschnitt.

Sofern im folgenden nichts anderes gesagt ist, gilt die folgende Beschreibung stets für alle Figuren.

Die Figuren zeigen eine Filteranlage 1 für das Wasser von Zierfischbecken.

Wesentlich ist ein Filtergehäuse 2, in welchem eine Vielzahl von voluminösen Filterpaketen 4 so angeordnet ist, daß das Wasser aus dem Zierfischbecken oder aus einem Gartenteich über den Zulauf 20 mittels einer Pumpe 3 in das Filtergehäuse verbracht wird. Die Pumpe 3 kann als Saugpumpe oder als Druckpumpe angeordnet sein.

Das über den Zulauf 20 in das Filtergehäuse 2 eintretende Wasser wird durch dort angeordnete voluminöse Filterpakete 4 geschleust. Hierunter ist zu verstehen, daß jedes Filterpaket von dem zulaufenden Wasser auf einer Filteraußenfläche 5 angeströmt wird, wobei das anströmende Wasser anschließend über die Filteraußenfläche in das Innere jedes Filterpakets 4 eindringt. Aus Kontinuitätsgründen muß das eintretende Wasser jedes Filterpaket auch wieder verlassen. Dies geschieht auf einer anderen Außenseite 6 jedes Filterpakets, nachdem das vorher zu filternde Wasser jedes Filterpaket 4 durchströmt hat.

Dies wird dadurch erreicht, daß das Filtervolumen jedes Filterpakets von dem zu filternden Wasser vollständig durchdrungen wird, wobei anschließend das gefilterte Wasser die Filterpakete auf einer anderen Außenseite 6 verläßt und über eine Rückförderleitung 7 in das Zierfischbecken zurückgefördert wird.

Ein wesentlicher Teilaspekt ist, daß bezüglich der gesamten zur Verfügung stehenden Filteraußenfläche 5, über welche das zu filternde Wasser in das Innere der Filterpakete einströmt, der rechnerische Wasserdurchsatz nicht mehr als 1200 l/m² Filteraußenfläche/Stunde beträgt.

Auf diese Weise wird dem zu filternden Wasser eine so geringe Strömungsgeschwindigkeit aufgeprägt, daß die im zu filternden Wasser enthaltenen Schwebstoffe außen auf den Filterpaketen bleiben und nicht in das Innere des Filterpakets gelangen können.

Diese Maßnahme bietet den Vorteil, daß sich die Materialien des Filterpakets nicht mit den Schmutzpartikeln zusetzen, so daß die Filterwirkung auch bei geringer Leistung der Pumpe 3 über lange Zeit erhalten bleibt.

Die geringe Strömungsgeschwindigkeit sorgt daher für eine Anlagerung der Schwebstoffe auf den Außenflächen 5 der Filterpakete 4, wobei sich gezeigt hat, daß ein dickenmäßig zu stark angewachsener biologischer Rasen durch einfaches Anstoßen des Filterpakets 4 von der Filteraußenfläche 5 abfällt. Diese Feststoffe können dann über geeignete Maßnahmen entsorgt werden. Hierauf wird noch eingegangen.

Die lediglich oberflächliche Anlagerung der Schmutzstoffe ermöglicht daher eine einfache Reinigung der Filterpakete, ohne daß der Filterbetrieb unterbrochen werden muß. Die sich später entwickelnden Mikroorganismen bewirken dann sogar die Selbstreinigung.

Zweckmäßigerweise sind die Filterpakete aus Filterschaumstoff, wobei sich Filterschaumstoff der Klassifikation PPI 30 besonders bewährt hat.

Die Figuren zeigen weiterhin, daß die Filterpakete auf einer Vielzahl von vertikal aufrecht stehenden prismatischen Elementen bestehen, von denen jedes im Inneren von einem perforierten Ablaufrohr 8 durchsetzt ist.

Das perforierte Ablaufrohr 8 sitzt dabei in einer Längsbohrung jedes Filterpakets 4, so daß das gefilterte Wasser im Inneren des Ablaufrohres 8 über die Perforationsbohrungen 24 austreten und gesammelt werden kann.

Ergänzend sind die Ablaufrohre 8 oben offen, wobei das oben offene Ende 9 mit einem vorgegebenen Überstand 10 das jeweilige Filterpaket 4 nach oben überragt.

Auf diese Weise wird, da es sich bei der Filteranlage um eine Schwerkraftanlage handelt, auch für eine Entgasung des gefilterten Wassers gesorgt, weil die Gase über die offenen Enden 9 der perforierten Ablaufrohre 8 entlassen werden können.

Die vorliegenden Beispiele zeigen darüber hinaus, daß die Ablaufrohre 8 unten an eine gemeinsame Sammelleitung 11 angeschlossen sind, die über die Rückförderleitung 7 mit der Zulaufseite des Zierfischbeckens kommuniziert.

Ergänzend hierzu zeigen die Figuren Ausführungsbeispiele, bei welchen die tiefste Stelle 12 der Sammelleitung 11 eine Ablaßvorrichtung 13 für sich dort ansammelnde Feststoffe aufweist.

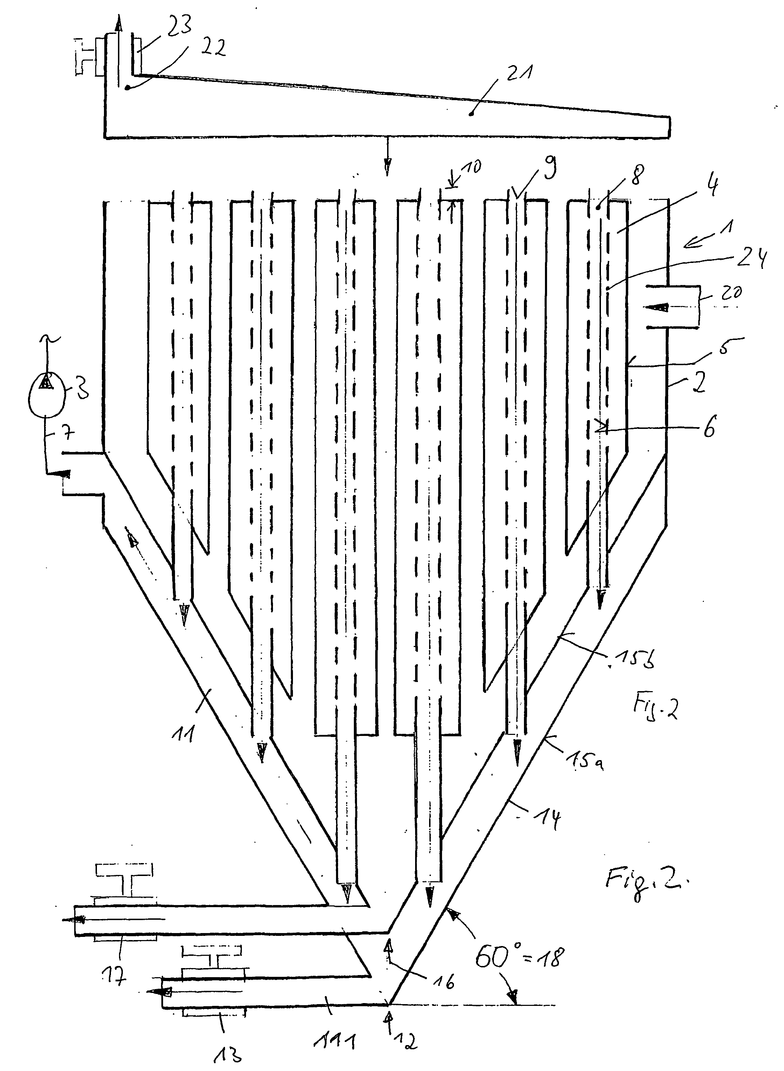

Zu diesem Zweck ist das Filtergehäuse 2 so ausgebildet, daß als tiefste Stelle eine mit der Spitze nach unten weisende Pyramide 14 dient, die über eine Doppelwandung 15a,15b mit den unteren Enden der Ablaufrohre 8 dicht kommuniziert. Dies wird dadurch erreicht, daß die unteren Enden der Ablaufrohre 8 über entsprechende Bohrungen in den Zwischenraum zwischen Außenwand 15a und Innenwand 15b der Doppelwandung eindringen und dort münden. Es entsteht somit innerhalb der Pyramidenkontur ein Sammelkanal, der an seiner tiefsten Stelle 12 ein Ablaßrohr 111 aufweist, welches im Betriebsfall über die Ablaßvorrichtung 13 verschlossen ist. Ergänzend hierzu zeigt Fig.2, daß die innerhalb des Filtergehäuses 2 liegende Innenwand 15b der Doppelwandung ihrerseits eine separate tiefste Stelle 16 aufweist, die mit einer separaten Ablaßvorrichtung 17 für die Feststoffe versehen ist.

Die sich an dieser separaten tiefsten Stelle 16 ansammelnden Feststoffe scheiden sich aus dem ungefilterten Wasser des Zulaufs 20 ab bzw. stammen aus dem biologischen Rasen, der sich auf der Filteraußenfläche 5 der Filterpakete 4 ansammelt.

Im vorliegenden Fall beträgt der Pyramidenwinkel 60°.

Der Pyramidenwinkel sollte in jedem Fall aber größer als 45° sein und weniger als 70° betragen.

Auf diese Weise wird verhindert, daß sich die abscheidenden Feststoffe innerhalb der Sammelkanäle anhäufen und diese verstopfen. Die Feststoffe werden auf diese Weise stets an die tiefsten Stellen 12 bzw. 16 des Filtergehäuses 2 bereits allein durch die Schwerkraft befördert. Ergänzend kann jedoch auch die Strömungsgeschwindigkeit des Wasserstroms zwischen dem Zulauf 20 und der Förderleitung 7 an dem Transport der Feststoffe zu den tiefsten Stellen 12 bzw. 16 beteiligt sein.

Das Filtergehäuse 2 ist zweckmäßigerweise als Standgehäuse ausgebildet. Zu diesem Zweck sind Standfüße 9 vorgesehen, die so lang sind, daß sich die tiefste Stelle 12 in jedem Fall oberhalb des Erdbodens befindet, wenn das Filtergehäuse 2 ordnungsgemäß aufgestellt ist.

Im vorliegenden Ausführungsbeispiel werden alle Filterpakete von dem zu filternden Wasserstrom parallel durchströmt. Somit ist sichergestellt, daß der auf 1200 l/m² Filteraußenfläche/Stunde begrenzte Wasserdurchsatz nach der vorliegenden Erfindung auch bei geringem Bauvolumen der Filteranlage leicht gewährleistet werden kann.

Die Filteranlage nach dieser Erfindung kann außerhalb des Zierfischbeckens aufgestellt sein. Für diesen Zweck ist ein oberer Abschluß des Filtergehäuses 2 nicht erforderlich.

Will man, zum Beispiel in der Aquaristik, die Filteranlage unterhalb des Wasserspiegels anordnen, ist ein Deckel 21 vorgesehen, der im vorliegenden Fall eine höchste Stelle 22 aufweist, wo sich die entgasten Bestandteile des gefilterten Wassers ansammeln können. In diesem Fall sind die Rohre 8 oben zu verschließen, zum Beispiel durch den Deckel 21.

Zweckmäßigerweise ist dort ein Absauganschluß 23 vorgesehen, der mit der Außenumgebung kommunizierend verbunden ist.

Wesentlich an der vorliegenden Erfindung ist ein effektiver Ammoniak/Nitrit/Nitratabbau im zu reinigenden Wasser durch den biologischen Rasen, der sich auf den Oberflächen der Filterpakete bildet.

Da die Strömungsgeschwindigkeit gering ist, muß das Filtermedium allenfalls an der Außenfläche von einem zu stark wuchernden biologischen Rasen befreit werden. Da dieser sich jedoch nur an der Außenfläche ansammelt, läßt er sich allein durch Anstoßen der Filterpakete entfernen. Die darin enthaltenen Feststoffe sammeln sich in jeweils separat vorgesehenen tiefsten Stellen der Filteranlage an und lassen sich über geeignete Ablaßvorrichtungen leicht aus dem System entfernen. Eine weitere tiefste Stelle 16 mit zugehöriger Ablaßvorrichtung 17 sorgt für eine schnelle Reinigung der im noch zu filternden Wasser vorhandenen Grobpartikel.

### Bezugszeichenaufstellung:

- 1: Filteranlage
- 2: Filtergehäuse
- 3: Pumpe
- 4: Filterpaket
- 5: Filteraußenfläche
- 6: andere Außenseite
- 7: Rückförderleitung
- 8: perforiertes Ablaufrohr
- 9: oben offenes Ende
- 10: Überstand
- 11: Sammelleitung
- 12: tiefste Stelle der Sammelleitung
- 13: Ablaßvorrichtung
- 14: Pyramide
- 15a: Außenwand der Doppelwandung
- 15b: Innenwand der Doppelwandung
- 16: separate tiefste Stelle
- 17: separate Ablaßvorrichtung
- 18: Pyramidenwinkel
- 19: Standfuß
- 20: Zulauf aus dem Zierfischbecken
- 21: Deckel
- 22: höchste Stelle
- 23: Absperrhahn
- 24: Perforationsbohrung
- 111: Ablaßrohr

## Patentansprüche

1. Filteranlage (1) für das Wasser von Zierfischbecken und Gartenteichen, mit einem Filtergehäuse (2) und mit einer Pumpe (3) zum Verbringen des Wassers aus dem Zierfischbecken oder dem Gartenteich in das Filtergehäuse (2) und mit im Filtergehäuse (2) angeordneten Filterpaketen (4), die aus einer Vielzahl von vertikal aufrecht stehenden prismatischen Elementen bestehen, von denen jedes im Inneren von einem perforierten Ablaufrohr (8) durchsetzt ist, wobei die Ablaufrohre (8) unten an eine gemeinsame Sammelleitung (11) Zur Rückführung des Wassers in das Zierfischbecken oder den Gartenteich angeschlossen sind, und wobei das Filtergehäuse (2) als tiefste Stelle eine mit der Spitze nach unten weisende Pyramide (14) aufweist, welche über eine Doppelwandung (15a,15b) mit den unteren Enden der Ablaufrohre (8) dicht kommuniziert, wobei die Sammelleitung (11) von der Doppelwandung (15a,15b) gebildet wird und eine tiefste Stelle (12) mit Ablaßvorrichtung (13) für Feststoffe aufweist, wobei die Filteranlage so dimensioniert ist, daß bei einem Wasserdurchsatz von nicht mehr als 1200 l/m² Filteraußenfläche / Betriebsstunde auf der gesamten zur Verfügung stehenden Filteraußenfläche (5) ein biologischer Rasen auf den Außenflächen des Filterpakets entsteht.

2. Filteranlage nach Anspruch 1, **dadurch gekennzeichnet, daß** die Filterpakete (4) aus Filterschaumstoff sind.

3. Filteranlage nach Anspruch 2, **dadurch gekennzeichnet, daß** der Filterschaumstoff der Klassifikation PPI 30 entspricht.

4. Filteranlage nach Anspruch 1, **dadurch gekennzeichnet, daß** die Ablaufrohre (8) oben offen sind und vorzugsweise über die zugehörigen Filterpakete (4) nach oben empor ragen.

5. Filteranlage nach Anspruch 1, **dadurch gekennzeichnet, daß** die innerhalb des Filtergehäuses (2) liegende Innenwand (15b) der Doppelwandung (15a,15b) ihrerseits eine separate tiefste Stelle (16) mit separater Ablaßvorrichtung (17) für die Feststoffe aufweist.

6. Filteranlage nach Anspruch 1, **dadurch gekennzeichnet, daß** der Pyramidenwinkel (18) mindestens 45°, vorzugsweise 55° bis etwa 65° beträgt.

7. Filteranlage nach Anspruch 1, **dadurch gekennzeichnet, daß** das Filtergehäuse Standfüße aufweist.

8. Filteranlage nach Anspruch 1, **dadurch gekennzeichnet, daß** alle Filterpakete (4) parallel durchströmt werden.

9. Filteranlage nach einem der Ansprüche 1 bis 7, **dadurch gekennzeichnet, daß** das Filtergehäuse (2) außerhalb des Zierfischbeckens angeordnet ist und oben offen ist.

10. Filteranlage nach einem der Ansprüche 1 bis 8, **dadurch gekennzeichnet, daß** das Filtergehäuse (2) unterhalb des Wasserspiegels steht und mit einem Deckel (21) verschlossen ist, wobei die Rohre (8) verschlossen sind.

11. Filteranlage nach Anspruch 9, **dadurch gekennzeichnet, daß** der Deckel (21) eine höchste Stelle (22) zur Luftansammlung aufweist.

12. Filteranlage nach Anspruch 10, **dadurch gekennzeichnet, daß** im Bereich der höchsten Stelle (22) ein Absperrhahn (23) vorgesehen ist.

## Claims

1. Filter system (1) for water from ornamental fish ponds and garden ponds, having a filter housing (2) and having a pump (3) for transferring the water from the ornamental fish pond or the garden pond into the filter housing (2) and having filter packets (4) disposed in the filter housing (2), which consist of a large number of prismatic elements standing vertically upright, each of which has a perforated outlet pipe (8) passing through the inside of it, wherein the outlet pipes (8) are attached at the bottom to a common collecting line (11) to return the water to the ornamental fish pond or garden pond, and wherein the filter housing (2) has as its deepest point a pyramid (14) with the point directed downwards, which pyramid communicates in a water-tight manner via a double wall (15a, 15b) with the lower end of the outlet pipes (8), wherein the collecting line (11) is formed by the double wall (15a, 15b) and has a deepest point (12) with an outlet device (13) for solids, wherein the filter system is dimensioned in such a way that with a throughput of water of not more than 1200 l/m² filter outer surface / hour of operation over the whole available filter outer surface (5) a microbial film is produced on the outer surfaces of the filter packet.

2. Filter system as claimed in claim 1, **characterised in that** the filter packets (4) are formed from filter foam.

3. Filter system as claimed in claim 2, **characterised in that** the filter foam corresponds to the classification PPI 30.

4. Filter system as claimed in claim 1, **characterised in that** the outlet pipes (8) are open at the top and preferably protrude upwards above the associated filter packets (4).

5. Filter system as claimed in claim 1, **characterised in that** the inner wall (15b) of the double wall (15a, 15b) lying inside the filter housing (2) comprises for its part a separate deepest point (16) with a separate outlet device (17) for the solids.

6. Filter system as claimed in claim 1, **characterised in that** the pyramid angle (18) amounts to at least 45°, preferably 55° to about 65°.

7. Filter system as claimed in claim 1, **characterised in that** the filter housing has stand feet.

8. Filter system as claimed in claim 1, **characterised in that** the flow passes through all the filter packets (4) in parallel.

9. Filter system as claimed in any one of claims 1 to 7, **characterised in that** the filter housing (2) is disposed outside the ornamental fish pond and is open at the top.

10. Filter system as claimed in any one of claims 1 to 8, **characterised in that** the filter housing (2) is below the water level and is closed by a cover (21), wherein the pipes (8) are closed.

11. Filter system as claimed in claim 9, **characterised in that** the cover (21) has a highest point (22) for air collection.

12. Filter system as claimed in claim 10, **characterised in that** in the region of the highest point (22) a shut-off valve (23) is provided.

## Revendications

1. Installation de filtration (1) pour l'eau de bassins pour poissons d'agrément et d'étangs, comprenant une enveloppe de filtre (2), une pompe (3) qui est destinée à faire passer l'eau du bassin ou de l'étang à l'enveloppe de filtre (2), et des filtres en paquet (4) qui sont disposés dans ladite enveloppe de filtre (2) et qui se composent de plusieurs éléments prismatiques placés à la verticale et traversés chacun, à l'intérieur, par un tuyau d'écoulement perforé (8), étant précisé que les tuyaux d'écoulement (8) sont raccordés en bas à une conduite collectrice commune (11) destinée à ramener l'eau dans le bassin ou l'étang, que l'enveloppe de filtre (2) présente comme point le plus bas une pyramide (14) dont la pointe est dirigée vers le bas et qui communique de manière étanche avec les extrémités inférieures des tuyaux d'écoulement (8), par l'intermédiaire d'une double paroi (15a, 15b), et que la conduite collectrice (11) est formée par la double paroi (15a, 15b) et comporte un point bas (12) avec un dispositif d'évacuation (13) pour les matières solides, l'installation de filtration étant dimensionnée pour qu'avec un débit d'eau ne dépassant pas 1200 l/m² de surface extérieure filtrante/heure de fonctionnement sur toute la surface extérieure filtrante (5) disponible, il se forme un gazon biologique sur les surfaces extérieures du filtre en paquet.

2. Installation de filtration selon la revendication 1, **caractérisée en ce que** les filtres en paquet (4) sont en mousse filtrante.

3. Installation de filtration selon la revendication 2, **caractérisée en ce que** la mousse filtrante correspond à la classification PPI 30.

4. Installation de filtration selon la revendication 1, **caractérisée en ce que** les tuyaux d'écoulement (8) sont ouverts en haut et dépassent de préférence des filtres en paquet associés (4) vers le haut.

5. Installation de filtration selon la revendication 1, **caractérisée en ce que** la paroi intérieure (15b) de la double paroi (15a, 15b) qui se trouve à l'intérieur de l'enveloppe de filtre (2) présente elle-même un point bas séparé (16) avec un dispositif d'évacuation séparé (17) pour les matières solides.

6. Installation de filtration selon la revendication 1, **caractérisée en ce que** les angles de pyramide (18) sont d'au moins 45°, de préférence de 55° à environ 65°.

7. Installation de filtration selon la revendication 1, **caractérisée en ce que** l'enveloppe de filtre a des pieds.

8. Installation de filtration selon la revendication 1, **caractérisée en ce que** tous les filtres en paquet (4) sont traversés parallèlement par l'écoulement.

9. Installation de filtration selon l'une des revendications 1 à 7, **caractérisée en ce que** l'enveloppe de filtre (2) est disposée à l'extérieur du bassin pour poissons d'agréments et est ouverte en haut.

10. Installation de filtration selon l'une des revendications 1 à 8, **caractérisée en ce que** l'enveloppe de filtre (2) se trouve au-dessous du niveau de l'eau et est fermée par un couvercle (21), les tuyaux (8) étant fermés.

11. Installation de filtration selon la revendication 9, **caractérisée en ce que** le couvercle (21) présente un point haut (22) pour l'accumulation d'air.

12. Installation de filtration selon la revendication 10, **caractérisée en ce qu'**il est prévu un robinet d'arrêt (23) dans la zone du point haut (22).
